Europäisches Patentamt

European Patent Office

Office européen des brevets

(19)

(11) Veröffentlichungsnummer: **0 094 986**
**B1**

(12) # EUROPÄISCHE PATENTSCHRIFT

(45) Veröffentlichungstag der Patentschrift:
**20.11.86**

(21) Anmeldenummer: **82111495.6**

(22) Anmeldetag: **11.12.82**

(51) Int. Cl.⁴: **G 01 D 5/245**

(54) **Einrichtung zum Unterteilen von analogen periodischen Signalen.**

(30) Priorität: **26.01.82 DE 3202356**

(43) Veröffentlichungstag der Anmeldung:
**30.11.83 Patentblatt 83/48**

(45) Bekanntmachung des Hinweises auf die Patenterteilung:
**20.11.86 Patentblatt 86/47**

(84) Benannte Vertragsstaaten:
**AT CH FR GB IT LI NL SE**

(56) Entgegenhaltungen:
**DE - A - 2 942 080**
**US - A - 3 594 783**

(73) Patentinhaber: **Dr. Johannes Heidenhain GmbH,
Nansenstrasse 17, D-8225 Traunreut (DE)**

(72) Erfinder: **Schmitt, Walter, Ing. grad.,
Hochgernstrasse 22, D-8225 Traunreut (DE)**
Erfinder: **Ritz, Franz, Ing. grad., Grassauer Strasse 55,
D-8212 Übersee (DE)**

**Beschreibung**

Die Erfindung betrifft eine Einrichtung zum Unterteilen von wenigstens zwei analogen periodischen Signalen, insbesondere von wegabhängigen Abtastsignalen bei der Abtastung einer periodisch strukturierten Teilung einer digitalen elektrischen Längen- oder Winkelmesseinrichtung gemäss dem Oberbegriff des Anspruchs 1.

Eine derartige Einrichtung ist aus der DE-A-2 942 080 bekannt. Das Auflösungsvermögen derartiger Messsysteme ist durch die Gitterkonstante der benutzten Teilung bestimmt. Es wurden bereits Anstrengungen unternommen, bei inkrementalen Messsystemen insbesondere durch elektronische Massnahmen kleinere Digitalschritte zu erreichen.

Bei einer Anordnung zur Interpolation – wie sie aus der CH-A-407 569 bekannt ist – sind die zueinander phasenverschobenen Analogsignale (Primärsignale) an eine Widerstandskette gelegt, die eine Reihe einstellbarer Spannungsteiler aufweist. Durch Abgriff der Spannungsteiler kann eine Vielzahl von Sekundärsignalen erzeugt werden, die zwischen den Primärsignalen liegen und so mittels einer Triggerschaltung eine Interpolation ermöglichen. Bei dieser Interpolationsanordnung wird eine hohe Anzahl von Triggern benötigt.

Ferner ist aus der DE-A-2 729 697 der Vorschlag bekannt, mit Hilfe eines Mikrocomputers aus den vorher digitalisierten Analogsignalen Interpolationswerte zu errechnen. Die Rechenzeit des Mikrocomputers bestimmt hier die maximale Bewegungsgeschwindigkeit beim Messen.

Die US-A-3 594 783 beschreibt eine Längenmesseinrichtung zur Messung der Relativlage zweier Objekte. In einem reversiblen Zähler werden digitale Signale zur numerischen Darstellung der Position des einen Objekts bezüglich des anderen Objekts erzeugt. Diese digitalen Signale werden einem Digital-/Analogwandler zugeführt, dessen beide Analogsignale entsprechend der dargestellten Position einem Transducer vom Resolvertyp zugeleitet werden, der mit den Objekten verbunden ist. Der Transducer erzeugt ein Differenzsignal, das die Richtung und den Betrag einer Differenz zwischen der numerisch dargestellten Position und der wirklichen Position des Objekts angibt. Während des Bestehens des Differenzsignals werden von einer Impulserzeugerstufe mit einem Taktgeber dem Zähler Impulse zur Korrektur der numerischen Darstellung bis zur Reduzierung des Differenzsignals auf den Wert Null zugeführt.

In der bereits erwähnten DE-A-2 942 080 ist ein Verfahren und eine Schaltungsanordnung zur digitalen Messung von inkremental unterteiltem Weg oder Drehwinkel offenbart, bei der ein Taktgeber Taktimpulse hoher Frequenz an einen ersten Teiler zur Unterteilung dieser Taktimpulse in einem vorgegebenen Unterteilungsverhältnis liefert. Die unterteilten Taktimpulse werden einem Impulsformer, beispielsweise einem Sinusimpulsformer, zugeführt, dessen beide Ausgangssignale jeweils einer ersten und einer zweiten Modulationseinrichtung in Form beispielsweise einer Multipliziereinrichtung zugeleitet werden. Die erste Modulationseinrichtung wird zudem mit dem sinusförmigen Ausgangssignal eines ersten Aufnehmers und die zweite Modulationseinrichtung zudem mit dem cosinusförmigen Ausgangssignal eines zweiten Aufnehmers beaufschlagt. Die Ausgangssignale der beiden Modulationseinrichtungen werden einer Addiereinrichtung zugeführt, deren Ausgangssignal ein moduliertes Signal in Form eines Sinussignals mit der Frequenz der Ausgangssignale des Impulsformers, jedoch mit einem anderen Phasenwinkel ist; dieser Phasenwinkel ist ein Mass für den Weg innerhalb eines Rasterteils der inkremental unterteilten Wegstrecke. Das Sinussignal der Addiereinrichtung wird einem phasenempfindlichen Demodulator zugeleitet, dessen Referenzspannung aus dem Taktgeber über eine Impulsaddier-/Subtrahierstufe und über einen zweiten Teiler gewonnen wird, dessen vorgegebenes Unterteilungsverhältnis mit demjenigen des ersten Teilers übereinstimmt. Das Ausgangssignal des Demodulators wird über ein Tiefpassfilter oder über einen Integrator einer Impulserzeugerstufe in Form eines Spannungs-/Frequenzumsetzers zugeführt, die je nach der Polarität des Eingangssignals ein Zählrichtungssignal an einen nachgeschalteten Zähler liefert, der die Ausgangssignale der Impulserzeugerstufe zählrichtungsabhängig einzählt; die Ausgangssignale der Impulserzeugerstufe werden ausserdem der Impulsaddier-/Subtrahierstufe zugeführt.

Der Erfindung liegt die Aufgabe zugrunde, eine Einrichtung zum Unterteilen von wenigstens zwei analogen periodischen Signalen zu schaffen, die relativ einfach aufgebaut ist, hohe Messgeschwindigkeiten zulässt, auch bei hohem Unterteilungsfaktor genaue Unterteilungswerte liefert und eine hohe Eigensicherheit gegen Fehlzählungen aufweist.

Diese Aufgabe wird bei einer Einrichtung der eingangs genannten Art durch die im Kennzeichen des Anspruches 1 angegebenen Merkmale gelöst.

Weitere – die Erfindung ausgestaltende – Merkmale sind in den abhängigen Ansprüchen angegeben.

Die Vorteile der Erfindung liegen in dem erheblich reduzierten Aufwand im Analogteil der Unterteilungseinrichtung, in der erhöhten Eigensicherheit hinsichtlich der Auswertung der Zählflanken bei bestimmter Frequenz und in der Veränderbarkeit des Unterteilungsfaktors.

Mit Hilfe der Zeichnungen soll anhand eines Ausführungsbeispieles die Erfindung noch näher erläutert werden.

Es zeigt

Fig. 1 eine vereinfachte Darstellung einer Wegmesseinrichtung mit Unterteilungseinrichtung,

Fig. 2 ein detailliertes Blockschaltbild der Unterteilungseinrichtung.

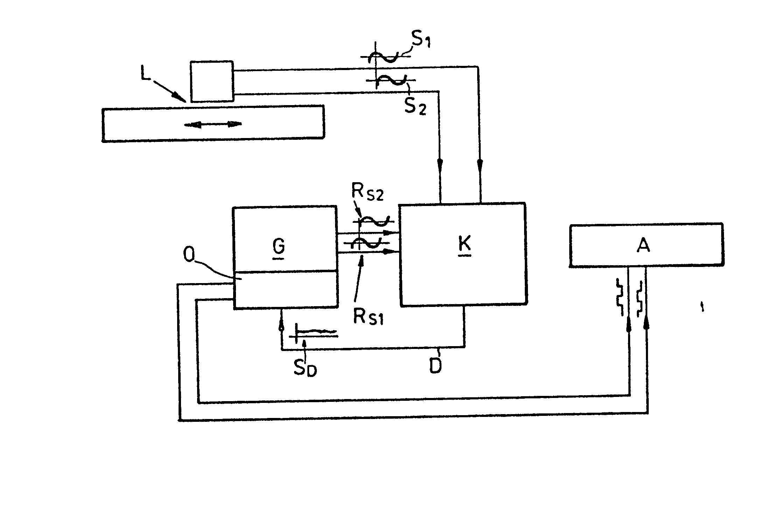

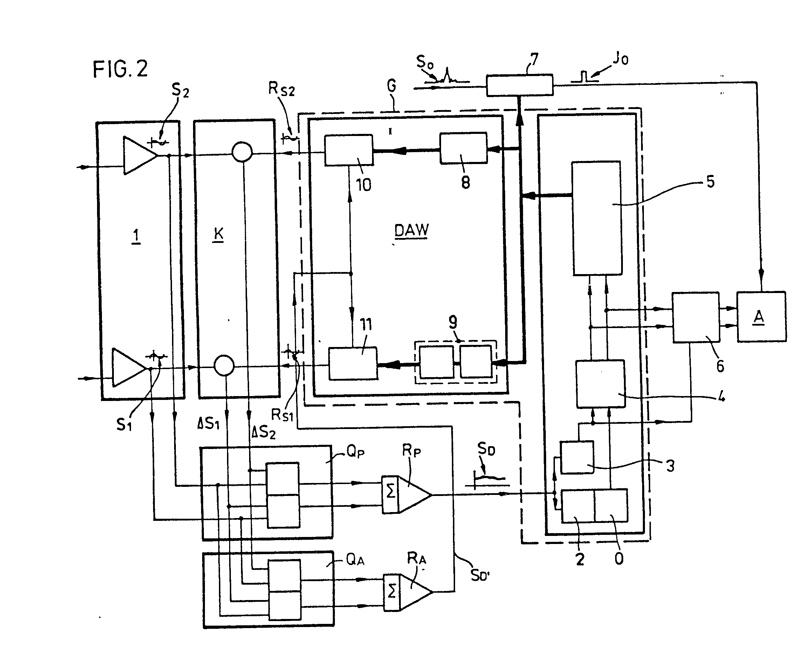

Ein in Figur 1 gezeigtes inkrementales Längenmessgerät L liefert in Abhängigkeit von der Messbewegung Abtastsignale $S_1$ und $S_2$, die in einen Komparator K eingespeist werden. Der Komparator K ist mit einem Signalgenerator G verbunden, der Referenzsignale $R_{S1}$ und $R_{S2}$ erzeugt und in den Komparator K einspeist. Die analogen Referenzsignale $R_{S1}$ und $R_{S2}$ werden digital erzeugt, wie nachstehend anhand der Figur 2 beschrieben wird. Abhängig vom Ergebnis des Vergleiches, den der Komparator K zwischen den Abtastsignalen $S_1$ bzw. $S_2$ und den Referenzsignalen $R_{S1}$ bzw. $R_{S2}$ vornimmt, steuert ein analoges Steuersignal $S_D$ über eine Steuerleitung D einen Oszillator O an, dessen Impulse in Abhängigkeit vom Steuersignal $S_D$ den Signalgenerator G speisen. Die Impulse werden ausserdem in einen inkrementalen Zähler mit numerischer Anzeige A eingespeist.

In der Figur 2 ist eine Einrichtung zur Unterteilung von analogen Messsignalen $S_1$ und $S_2$ in Form eines Blockschaltbildes dargestellt. Die in bekannter Weise zur Richtungserkennung um 90° phasenversetzten Abtastsignale $S_1$ und $S_2$ werden in einem Abtastsignalverstäker 1 verstärkt. Die verstärkten analogen Abtastsignale $S_1$ und $S_2$ werden in einen Komparator K eingespeist, in welchem sie mit analogen Referenzsignalen $R_{S1}$ und $R_{S2}$ hinsichtlich der momentanen Amplitudenwerte verglichen werden.

Die verstärkten Abtastsignale $S_1$ und $S_2$ werden ausserdem in elektronische Bausteine $Q_P$ und $Q_A$ eingespeist. In diese elektronischen Bausteine $Q_P$ und $Q_A$ werden zudem noch Signale $\Delta S_1$ und $\Delta S_2$ eingespeist, die vom Komparator K als Ergebnis des Vergleiches von Abtastsignalen $S_1$ bzw. $S_2$ mit Referenzsignalen $R_{S1}$ bzw. $R_{S2}$ erzeugt werden. In den elektronischen Bausteinen $Q_P$ und $Q_A$ wird anhand der eingespeisten Signale $S_1$, $S_2$, $\Delta S_1$ und $\Delta S_2$ eine Quadrantenbewertung der Signale vorgenommen, d.h. es wird ermittelt, in welchem Quadranten die ermittelte Differenz zwischen den Abtastsignalen $S_1$ bzw. $S_2$ und den zugehörigen Referenzsignalen $R_{S1}$ bzw. $R_{S2}$ auftritt, und mit welchem Vorzeichen der jeweilige Differenzbetrag beaufschlagt werden muss. Die quadrantenbewerteten Signale werden jeweils einem Regelverstärker für die Phase $R_P$ und die Amplitude $R_A$ zugeführt, die die Steuersignale $S_D$ für die Phase und $S_D'$ für die Amplitude erzeugen.

Das dem Signalgenerator G zugeführte Steuersignal $S_D$ für die Phase wird im Signalgenerator G von Bausteien 2 und 3 auf Informationen wie Betrag und Richtung untersucht. Der Betrag wird in Form einer Spannung an den Oszillator O angelegt, die Richtungsinformationen in einen Richtungsdiskriminator 4 eingespeist. Der Oszillator O erzeugt in Abhängigkeit von dem angelegten Steuersignal $S_D$ digitale Impulse, die ebenfalls dem Richtungsdiskriminator 4 zugeführt werden. Die am Ausgang des Richtungsdiskriminators 4 anliegenden Impulse beaufschlagen den Vorwärts- bzw. den Rückwärtseingang eines Zählers 5 und durchlaufen eine sogenannte Stillstandslogik 6, die ausserdem die Richtungsinformation von dem Baustein 3 erhält. Die die Stillstandslogik 6 durchlaufenden Impulse werden in einem inkrementalen Zähler mit numerischer Anzeige A gezählt und als gemessene Strecke angezeigt.

Der Bezug zur gemessenen Strecke, die der Verfahrbewegung der relativ zueinander beweglichen Bauteile der Längenmesseinrichtung L entspricht, wird durch den ständigen Vergleich der Abtastsignale $S_1$, $S_2$ mit den Referenzsignalen $R_{S1}$ und $R_{S2}$ gewonnen.

Der von den digitalen Impulsen des Oszillators O beaufschlagte Zähler 5 zählt diese Impulse. Davon ausgehend, dass eine Periode der analogen Abtastsignale $S_1$ bzw. $S_2$ 100fach unterteilt werden soll, wird als Unterteilungsfaktor $N=100$ festgelegt.

Der Signalgenerator G für die Referenzsignale $R_{S1}$ und $R_{S2}$ ist so ausgelegt, dass an seinen Ausgängen – die mit den Eingängen des Komparators K verbunden sind – immer dann ein Referenzsignal $R_{S1}$ und $R_{S2}$ mit einer vollständigen Periode anliegt, wenn der Zähler 5 einhundert vom Oszillator O erzeugte Impulse gezählt hat. Um dies zu gewährleisten, ist im Signalgenerator G ein Digital-/Analogwandler DAW vorgesehen, der so aufgebaut ist, dass an seinem Ausgang ein analoges Signal ansteht, und zwar in Abhängigkeit von den binären Informationen, die an seinen Eingang angelegt werden.

Die Anzahl der erzeugten Impulse ist aber abhängig von dem Steuersignal $S_D$, das aus dem Vergleich der Abtastsignale $S_1$, $S_2$ mit den Referenzsignalen $R_{S1}$, $R_{S2}$ hervorgeht. Das Referenzsignal $R_{S1}$ bzw. $R_{S2}$ ist somit abhängig vom Ergebnis des Vergleiches zwischen den Abtastsignalen $S_1$, $S_2$ und den Referenzsignalen $R_{S1}$, $R_{S2}$.

Der Funktionsablauf ist folgender:

Ausgehend von der Annahme, dass ein bewegliches Teil der Messeinrichtung L um eine bestimmte Strecke bewegt wird, liegen seitens des Abtastsignalverstärkers 1 Momentanwerte der analogen Signale $S_1$, und $S_2$ am Eingang des Komparators K an, die nicht mit den Momentanwerten der Referenzsignale $R_{S1}$ und $R_{S2}$ an den anderen Eingängen des Komparators K übereinstimmen. Der Vergleich zwischen $S_1$ und $R_{S1}$ bzw. $S_2$ und $R_{S2}$ ergibt also Differenzsignale $\Delta S_1$ bzw. $\Delta S_2$, die in den Bausteinen $Q_P$ und $Q_A$ so aufbereitet werden, dass im Regelverstärker $R_P$ ein Steuersignal $S_D$ für die Phase, und im Regelverstärker $R_A$ ein Steuersignal $S_D'$ für die Amplituden erzeugt wird das jeweils der Differenz der Momentanwerte der Signale $S_1$, $R_{S1}$ bzw. $S_2$, $R_{S2}$ entspricht.

Der als Spannung am Oszillator O anliegende Betrag des Steuersignals $S_D$ ruft im Oszillator O die Erzeugung von Impulsen hervor, und zwar in diesem Fall einer Anzahl von Impulsen, die dem hundertfachen Bruchteil der Länge einer Signalperiode P entspricht, um den das bewegliche Teil der Messeinrichtung L bewegt wurde, da für eine vollständige Signalperiode einhundert Impulse erforderlich sind.

Diese Impulse werden nun nach Richtungsbestimmung zum einen dem inkrementalen Zähler mit numerischer Anzeige A zugeführt, der diese Anzahl Impulse anzeigt, zum zweiten werden die Impulse dem Zähler 5 zugeführt, der das Zählergebnis in Form einer binären Information in den Digital-/Analogwandler DAW einspeist, der seinerseits daraus Signale erzeugt, die nun als neue, den neuen Abtastsignalen $S_1$ bzs. $S_2$ angepasste Referenzsignale $R_{S1}$ bzw. $R_{S2}$ an den anderen Eingängen des Komparators K anliegen. Nach diesem Ablauf ist das Vergleichsergebnis zwischen $S_1$, $R_{S1}$ und $S_2$, $R_{S2}$ = 0, d.h. $\Delta S_1 = \Delta S_2 = 0$. Somit entsteht kein Steuersignal $S_D$ mehr und der Oszillator O erzeugt keine Impulse mehr. Dieser Ablauf erfolgt kontinuierlich, so dass das Anzeigeergebnis ständig der unmittelbaren Messbewegung entspricht.

Der Regelverstärker $R_A$ für die Amplitude liefert ein vergleichsabhängiges Steuersignal $S_D'$ für die Nachregelung der Amplitude. Dieses Steuersignal $S_D'$ wird ebenfalls in den Digital-/Analogwandler DAW eingespeist und veranlasst mit Hilfe einer Referenzspannung, dass die Momentanwerte der Amplituden der Referenzsignale $R_{S1}$ und $R_{S2}$ den Momentanwerten der Amplituden der Abtastsignale $S_1$ und $S_2$ angeglichen werden. Auch dafür wird eine Quadrantenbewertung, hier im Baustein $Q_A$ durchgeführt.

Die Bezugslage für eine Messung wird in bekannter Weise durch eine nicht dargestellte Referenzmarke gewonnen. Ein durch die Messeinrichtung L von dieser Referenzmarke abgeleitetes Referenzsignal $S_0$ wird in einem elektronischen Baustein 7 mit den binären Informationen aus dem Zähler 5 verknüpft, auskodiert und als Referenzimpuls $J_0$ dem inkrementalen Zähler mit numerischer Anzeige A zugeführt, der ihn in bekannter Weise auswertet; d.h., den Zählerstand auf «Null» oder einen beliebigen vorgewählten Wert setzt, wenn der Referenzimpuls $J_0$ auftritt.

Wirkungen der Laufzeiten der primären Abtastsignale $S_1$ und $S_2$, die bei dynamischen Messungen zu fehlerhaften Ergebnissen führen können und beispielsweise im Abtastsignalverstärker 1 auftreten, werden durch ein Laufzeitglied im Digital-/Analogwandler DAW kompensiert, so dass die Abtastsignale $S_1$, $S_2$ und die Referenzsignale $R_{S1}$, $R_{S2}$ mit gleicher Laufzeit am Komparator K anliegen.

Desgleichen kann der Komparator K vor den Abtastsignalverstärker 1 geschaltet werden, so dass der im Komparator K vorgenommene Vergleich der Signale $S_1$, $R_{S1}$ und $S_2$, $R_{S2}$ von der Laufzeit der Signale im Verstärker 1 nicht abhängig ist.

**Patentansprüche**

1. Einrichtung zum Unterteilen von wenigstens zwei analogen periodischen Signalen ($S_1$, $S_2$), insbesondere von wegabhängigen Abtastsignalen bei der Abtastung einer periodisch strukturierten Teilung eines digitalen elektrischen Längen- oder Winkelmessgerätes, bei der ein Signalgenerator (G) von Impulsen eines Oszillators (O) beaufschlagbar ist und eine definierte Anzahl (n) aufeinanderfolgender Impulse des Oszillators (O) den Unterteilungsgrad bestimmt, dadurch gekennzeichnet, dass der Signalgenerator (G) zur Erzeugung wenigstens zweier analoger Referenzsignale ($R_{S1}$, $R_{S2}$) einen Digital-/Analogwandler (DAW) aufweist, dass ein Komparator (K) zum Vergleich der momentanen Amplituden der entsprechenden zwei analogen periodischen Signale ($S_1$, $S_2$) mit vorgegebener Periode (P) und der entsprechenden wenigstens zwei analogen Referenzsignale ($R_{S1}$, $R_{S2}$) mit der vorgenannten Periode (P) vorgesehen ist und dass der Oszillator (O) zur Erzeugung der Impulse von einem vergleichsabhängigen analogen Steuersignal ($S_D$) des Komparators (K) beaufschlagt ist, derart dass die definierte Zahl (n) von Oszillator-Impulsen jeweils die Erzeugung einer vollen Periode (P) der Referenzsignale ($R_{S1}$, $R_{S2}$) durch den Signalgenerator (G) hervorruft.

2. Einrichtung nach Anspruch 1, dadurch gekennzeichnet, dass ein Vorwärts-/Rückwärtszähler (5) mit den digitalen Impulsen des Oszillators (O) beaufschlagt ist und dass die in Abhängigkeit von diesen digitalen Impulsen entstehende Binärinformation des Vorwärts-/Rückwärtszählers (5) zum einen dem Digital-/Analogwandler (DAW) und zum anderen einem Verknüpfungsbaustein (7) zugeführt ist.

3. Einrichtung nach einem der Ansprüche 1 und 2, dadurch gekennzeichnet, dass der Digital-/Analogwandler (DAW) einen Sinusconverter (8) und einen Cosinusconverter (9) und die eigentlichen Wandlerbausteine (10, 11) aufweist und dass beim Anliegen der der vom Vorwärts-/Rückwärtszähler (5) ermittelten Anzahl von digitalen Impulsen des Oszillators (O) entsprechenden Binärinformation am Eingang des Sinusconverters (8) bzw. am Eingang des Cosinusconverters (9) an den Ausgängen der zugehörigen Wandlerbausteine (10, 11) jeweils das sinusförmige Referenzsignal ($R_{S1}$) bzw. das cosinusförmige Referenzsignal ($R_{S2}$ mit der vorgenannten Periode (P) ansteht.

4. Einrichtung nach Anspruch 1, dadurch gekennzeichnet, dass der Komparator (K) zwei Differenzsignale ($\Delta S_1$; $\Delta S_2$) erzeugt, die der momentanen Amplitudendifferenz zwischen jeweils einem analogen periodischen Signal und einem analogen Referenzsignal ($S_1$, $R_{S1}$; $S_2$, $R_{S2}$) entsprechen.

5. Einrichtung nach Anspruch 4, dadurch gekennzeichnet, dass die analogen periodischen Signale ($S_1$, $S_2$) und die Differenzsignale ($\Delta S_1$, $\Delta S_2$) in Bausteinen ($Q_P$, $Q_A$) bezüglich ihrer Quadrantenlage derart bewertbar sind, dass der eine Baustein ($Q_P$) das phasenproportionale analoge Steuersignal ($S_D$) und der andere Baustein ($Q_A$) ein amplitudenproportionales Steuersignal ($S_D'$) liefert.

6. Einrichtung nach Anspruch 5, dadurch gekennzeichnet, dass das amplitudenproportionale Steuersignal ($S_D'$) dem Digital-/Analogwandler (DAW) zur Nachregelung der momentanen Amplituden der beiden analogen Referenzsignale ($R_{S1}$, $R_{S2}$) bezüglich der momentanen Amplituden der beiden analogen periodischen Signale ($S_1$, $S_2$) zugeführt ist.

7. Einrichtung nach einem der Ansprüche 1 und 4, dadurch gekennzeichnet, dass dem Komparator (K) ein Verstärker für die Differenzsignale ($\Delta S_1$, $\Delta S_2$) nachgeschaltet ist.

8. Einrichtung nach einem der Ansprüche 1 und 3, dadurch gekennzeichnet, dass zur Kompensation der Laufzeit der analogen periodischen Signale ($S_1$, $S_2$) vor ihrem jeweiligen Vergleich mit den analogen Referenzsignalen ($R_{S1}$, $R_{S2}$) ein Zeitverzögerungsglied für die analogen Referenzsignale ($R_{S1}$, $R_{S2}$) vorgesehen ist.

## Claims

1. Device for subdividing at least two analog periodic signals ($S_1$, $S_2$) and particularly distance-dependent scanning signals during the scanning of a periodically structured division of a digital electric length or angle measuring instrument, in which device pulses of an oscillator (O) can be applied to a signal generator (G) and a defined number (n) of successive pulses of the oscillator (O) determines the degree of subdividing, characerised in that the signal generator (G) is provided with a digital/analog converter (DAW) for generating at least two analog reference signals ($R_{S1}$, $R_{S2}$), that a comparator (K) for comparing the instantaneous amplitudes of the corresponding two analog periodic signals ($S_1$, $S_2$) with predetermined period (P) and the corresponding at least two analog reference signals $R_{S1}$, $R_{S2}$) with the aforementioned period (P) is provided and that a comparison-dependent analog control signal ($S_D$) of the comparator (K) is applied to the oscillator (O) for generating the pulses, in such a manner that the defined number (n) of oscillator pulses causes in each case a full period (P) of the reference signals ($R_{S1}$, $R_{S2}$) to be generated by the signal generator (G).

2. Device according to Claim 1, characterised in that the digital pulses of the oscillator (O) are applied to an up-/down-counter (5) and that the binary information, created in dependence on these digital pulses, of the up-/down-counter (5) is fed, on the one hand, to the digital/analog converter (DAW) and, on the other hand, to a logic component (7).

3. Device according to one of Claims 1 and 2, characterised in that the digital/analog converter (DAW) is provided with a sine converter (8) and a cosine converter (9) and the actual converter components (10, 11) and that, if the binary information corresponding to the number, determined by the up-/down-counter (5), of digital pulses of the oscillator (O) at the input of the sine converter (8) and at the input of the cosine converter (9), the sinusoidal reference signal ($R_{S1}$) and the cosinusoidal reference signal ($R_{S2}$), having the aforementioned period (P) is present in each case at the outputs of the associated converter components (10, 11).

4. Device according to Claim 1, characterised in that the comparator (K) generates two different signals ($\Delta S_1$; $\Delta S_2$) which correspond the instantaneous difference in amplitudes between an analog periodic signal and an analog reference signal ($S_1$, $R_{S1}$; $S_2$, $R_{S2}$) in each case.

5. Device according to Claim 4, characterised in that the quadrant relationship of the analog period signals ($S_1$, $S_2$) and of the difference signals ($\Delta S_1$, $\Delta S_2$) can be evaluated in chips ($Q_P$, $Q_A$) in such a manner that one chip ($Q_P$) supplies the phase-proportional analog control signal ($S_D$) and the other chip ($Q_A$) supplies an amplitude-proportional control signal ($S_D'$).

6. Device according to Claim 5, characterised in that the amplitude-proportional control signal ($S_{D'}$) is fed to the digital/analog converter (DAW) for readjusting the instantaneous amplitudes of the two analog reference signals ($R_{S1}$, $R_{S2}$) with reference to the instantaneous amplitudes of the two analog periodic signals ($S_1$, $S_2$).

7. Device according to one of Claims 1 and 4, characterised in that the comparator (K) is followed by an amplifier for the difference signals ($\Delta S_1$, $\Delta S_2$).

8. Device according to one of Claims 1 and 3, characterised in that a time delay section is provided for the analog reference signals ($R_{S1}$, $R_{S2}$) for compensating for the transit time of the analog periodic signals ($S_1$, $S_2$) before their respective comparison with the analog reference signals ($R_{S1}$, $R_{S2}$).

## Revendications

1. Dispositif pour la subdivision d'au moins deux signaux analogiques périodiques ($S_1$, $S_2$) en particulier de signaux de balayage dépendant du trajet lors du balayage d'une graduation à structure périodique d'un appareil électrique de mesure numérique de longueurs et d'angles, dans lequel un générateur de signaux (G) reçoit les impulsions d'un oscillateur (O) et un nombre défini (n) d'impulsions successives de l'oscillateur (O) détermine le degré de subdivision, caractérisé par le fait que le générateur de signaux (G) comporte un convertisseur numérique/analogique (DAW) pour la production d'au moins deux signaux de référence analogiques ($R_{S1}$, $R_{S2}$), qu'un comparateur (K) est prévu pour comparer les amplitudes momentanées des deux signaux analogiques périodiques correspondants ($S_1$, $S_2$) de période prédéterminée (P) et d'au moins les deux signaux de référence analogiques correspondants ($R_{S1}$, $R_{S2}$) de la période précitée (P) et que l'oscillateur (O), pour la production des impulsions, reçoit un signal de commande analogique ($S_D$) en fonction de la comparaison du comparateur (K), de telle sorte que le nombre défini (n) d'impulsions de l'oscillateur provoque à chaque fois la production d'une pleine période (P) des signaux de référence ($R_{S1}$, $R_{S2}$) par le générateur de signaux (G).

2. Dispositif selon la revendication 1, caractérisé par le fait qu'un compteur-décompteur (5) reçoit les impulsions numériques de l'oscillateur (O) et que l'information binaire du compteur-décompteur (5), apparaissant en fonction de ces impulsions numériques, est appliquée, d'une part, au convertisseur numérique/analogique (DAW) et, d'autre part, à un bloc logique (7).

3. Dispositif selon l'une des revendications 1 et 2, caractérisé par le fait que le convertisseur numérique/analogique (DAW) comporte un convertisseur sinus (8), un convertisseur cosinus (9) et les modules convertisseurs proprement dits (10, 11) et que lors de l'application, à l'entrée du convertisseur sinus (8) ou à l'entrée du convertisseur cosinus (9), de l'information binaire correspondant au nombre, déterminé par le compteur-décompteur (5), d'impulsions numériques de l'oscillateur, il apparaît respectivement aux sorties des modules convertisseurs (10, 11) associés, le signal de référence sinusoïdal ($R_{S1}$) ou le signal de référence cosinusoïdal ($R_{S2}$) de la période précitée (P).

4. Dispositif selon la revendication 1, caractérisé par le fait que le comparateur (K) produit deux signaux différentiels ($\Delta S_1$, $\Delta S_2$) qui correspondent à la différence d'amplitude momentanée entre respectivement un signal périodique analogique et un signal de référence analogique ($S_1$, $R_{S1}$; $S_2$, $R_{S2}$).

5. Dispositif selon la revendication 4, caractérisé par le fait que les signaux périodiques analogiques ($S_1$, $S_2$) et les signaux différentiels ($\Delta S_1$, $\Delta S_2$) peuvent être pondérés dans des modules ($Q_P$, $Q_A$) en ce qui concerne leur position quadrantale, de telle sorte que l'un module ($Q_P$) délivre le signal de commande analogique ($S_D$) proportionnel en phase et l'autre module ($Q_A$) un signal de commande ($S_D'$) proportionnel en amplitude.

6. Dispositif selon la revendication 5, caractérisé par le fait que le signal de commande ($S_D'$) proportionnel en amplitude est appliqué au convertisseur numérique/analogique (DAW) pour le rajustage des amplitudes momentanées des deux signaux de référence analogiques ($R_{S1}$, $R_{S2}$) par rapport aux amplitudes momentanées des deux signaux périodiques analogiques ($S_1$, $S_2$).

7. Dispositif selon l'une des revendications 1 et 4, caractérisé par le fait qu'en aval du comparateur (K) est monté un amplificateur pour les signaux différentiels ($\Delta S_1$, $\Delta S_2$).

8. Dispositif selon l'une des revendications 1 et 3, caractérisé par le fait que pour la compensation du temps de parcours des signaux périodiques analogiques ($S_1$, $S_2$) avant leur comparaison respective avec les signaux de référence analogiques ($R_{S1}$, $R_{S2}$), il est prévu un organe de temporisation pour les signaux de référence analogiques ($R_{S1}$, $R_{S2}$).

0 094 986

S$_1$

S$_2$

L

R$_{S2}$

G

K

A

O

R$_{S1}$

S$_D$

D

FIG.2